Europäisches Patentamt

(19) European Patent Office

Office européen des brevets

(11) EP 0 878 289 A1

## (12) DEMANDE DE BREVET EUROPEEN

(43) Date de publication:
18.11.1998 Bulletin 1998/47

(51) Int. Cl.⁶: $B29C\ 67/24$, $B29C\ 55/28$, $C08J\ 5/18$, $C08G\ 63/08$

(21) Numéro de dépôt: 98201493.8

(22) Date de dépôt: 07.05.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 16.05.1997 BE 9700434

(71) Demandeur:
SOLVAY (Société Anonyme)
B-1050 Bruxelles (BE)

(72) Inventeurs:
• Claeys, Ivan
  1981 Zemst/Hofstade (BE)
• Dehennau, Claude
  1410 Waterloo (BE)

(74) Mandataire:
Dambois, Denis Camille Daniel et al
Solvay S.A.
DCR-PI
310, rue de Ransbeek
1120 Bruxelles (BE)

### (54) Procédé de fabrication d'un film soufflé biodégrable

(57) Procédé de fabrication d'un film soufflé essentiellement constitué d'un polyester aliphatique, selon lequel :

(1) on synthétise le polyester à partir d'au moins un ester cyclo-aliphatique, à l'intervention d'un amorceur comprenant au moins un trialkoxyde métallique et/ou tétralkoxyde métallique, dans un dispositif d'extrusion ;
(2) on procède à l'extrusion-soufflage du polyester, immédiatement après sa synthèse dans ledit dispositif d'extrusion, muni à cet effet d'une filière d'extrusion-soufflage, avec un taux de gonflement d'au moins 2,5.

L'invention concerne également un film essentiellement constitué d'un polyester aliphatique, pouvant être obtenu selon le procédé de l'une des revendications précédentes, dont les modules d'élasticité longitudinal (EL) et transversal (ET) et les retraits longitudinal (RL) et transversal (RT), ces retraits étant mesurés à une température inférieure d'environ 5 °C à la température de fusion du polyester, respectent les relations suivantes :

$$ET \geq EL\ \text{et}\ RT \leq RL.$$

EP 0 878 289 A1

**Description**

La présente invention concerne un procédé de fabrication d'un film soufflé biodégradable.

Diverses industries sont plus en plus demandeuses de polymères biodégradables. De tels polymères sont par exemple les polyesters aliphatiques tels que les polymères de l'ε-caprolactone (appelés plus simplement poly-ε-caprolactones, ou encore PCL). Ces polymères constituent en effet des polymères thermoplastiques biocompatibles et biodégradables bien connus, dont les débouchés les plus prometteurs se situent, précisément en raison de ces propriétés particulières, dans le domaine des films, tels que des films pour l'emballage, pour la protection des récoltes ou encore pour couches-culottes.

Toutefois, dans certaines applications, ces polymères présentent des propriétés rhéologiques peu satisfaisantes, en particulier dans la perspective de la fabrication de films soufflés. Il est notamment connu que la fabrication de films soufflés à base de PCL est délicate, et conduit souvent à une instabilité de la bulle, entraînant des fluctuations inacceptables des propriétés du film obtenu. Ceci conduit à limiter fortement les débits et les taux de gonflement (radial) et d'étirage (axial), ce qui réduit l'intérêt de cette technique; en particulier, cela limite la largeur du film, et donc le rendement de la ligne de fabrication. En outre, l'ensemble des conditions opératoires doit faire l'objet de limitations et/ou d'une régulation précise, afin d'éviter tout risque d'instabilité. Cette situation est regrettable, étant donné que l'extrusion-souf-flage constitue un procédé particulièrement avantageux et économique de fabrication de films lorsqu'elle n'est pas soumise à de telles contraintes. Par ailleurs, l'obligation de limiter la température d'extrusion (sous peine d'instabilité) ne permet pas toujours d'obtenir un film a l'état de surface satisfaisant.

Pour remédier à ces problèmes, diverses solutions ont déjà été proposées, chacune opérant au départ de granules d'un polymère synthétisé préalablement. Une solution consiste notamment à refroidir la bulle au moyen d'air réfrigéré, ce qui permet d'accélérer la cristallisation, d'abaisser le col de la bulle et ainsi de stabiliser la bulle. De manière comparable, la demande de brevet japonais JP 06/143412 propose d'utiliser un refroidissement de la bulle par eau. Cette solution est complexe, et ne permet pas de dépasser un taux de gonflement de 2. En outre, ce refroidissement brutal fige des contraintes internes dans le film, ce qui conduit à un retrait important en cas de réchauffage ultérieur. Le document EP 708148 confirme que l'extrusion-soufflage de polyesters aliphatiques est extrêmement difficile et, alternativement, suggère de la faciliter en mélangeant à ces polyesters de 5 à 50 % de polymères porteurs de groupements polaires : les films ainsi obtenus ne sont donc pas totalement biodégradables. Certaines propriétés rhéologiques des polyesters aliphatiques, notamment leur tenue en fondu, peuvent en outre être améliorées par une augmentation de leur masse moléculaire, mais celle-ci conduit à une augmentation de la viscosité, qui provoque une augmentation de la consommation d'énergie mécanique et un autoéchauffement plus élevé dans l'extrudeuse. Or, une telle élévation de température retarde la cristallisation, de sorte que la gaîne risque de se ressouder entre les rouleaux pinceurs dans certains cas. Une température excessive peut en outre provoquer une dégradation du polymère. Par ailleurs, la synthèse discontinue de PCL de très haute masse moléculaire en autoclave est impossible à effectuer de manière rentable, parce que la viscosité du polymère rallonge excessivement le temps nécessaire à la vidange de l'autoclave, impose l'utilisation de mélangeurs plus puissants et réduit l'efficacité de l'échange thermique avec les parois. On peut encore ajouter qu'une augmentation de la viscosité fait que l'étirage radial et axial requièrent des efforts considérables, lesquels induisent des contraintes et provoquent ensuite des retraits importants.

Dès lors, la présente invention vise à fournir un procédé de fabrication de films soufflés essentiellement constitués d'un polyester aliphatique, qui soit simple et d'une stabilité élevée. Cette stabilité permettrait ainsi d'atteindre des taux de gonflement et d'étirage élevés, sans exiger une masse moléculaire élevée ; plus généralement, cette stabilité réduirait les exigences imposées à la régulation des conditions opératoires.

Plus précisément, la présente invention concerne un procédé de fabrication d'un film soufflé essentiellement constitué d'un polyester aliphatique, selon lequel :

(1) on synthétise le polyester à partir d'au moins un ester cyclo-aliphatique, à l'intervention d'un amorceur comprenant au moins un trialkoxyde métallique et/ou tétralkoxyde métallique, dans un dispositif d'extrusion ;
(2) on procède à l'extrusion-soufflage du polyester, immédiatement après sa synthèse dans ledit dispositif d'extrusion, muni à cet effet d'une filière d'extrusion-soufflage, avec un taux de gonflement d'au moins 2,5. Le fait que la synthèse du polymère et sa mise en oeuvre soient simultanées offre plusieurs avantages, notamment sur le plan de la simplicité (appareillage unique) et de l'économie (un seul chauffage). Sur le plan économique, ce procédé permet encore de supprimer une étape de granulation, d'emballage et de stockage. Par ailleurs, il permet de constater sans délai une éventuelle erreur de fabrication, contrairement au procédé classique dans lequel il se peut qu'un lot entier doive être éliminé lorsqu'on constate un problème lors de sa mise en oeuvre, qui n'est pas simultanée par rapport à sa synthèse. En outre, on a constaté avec surprise que selon ce procédé, l'extrusion-soufflage se faisait de manière extrêmement stable, même avec des taux de gonflement et/ou d'étirage élevés, avec des polyesters de faible masse moléculaire, et/ou à des températures élevées.

Comme indiqué ci-dessus, le polyester aliphatique dont est essentiellement constitué le film est synthétisé à partir d'au moins un ester cyclo-aliphatique, par ouverture du cycle. Ce mode de synthèse est préférable, dans la perspective d'une synthèse en extrudeuse, aux modes de synthèse impliquant une réaction de polycondensation, qui libère de l'eau. A titre d'exemples d'esters cycloaliphatiques utilisables, on peut citer les lactones et les lactides (par exemple la 3,5-diméthyl-1,4-dioxane-2,6-dione, ou la 1,4-dioxane-2,6-dione (anhydride diglycolique)). On utilise avantageusement une ou plusieurs lactones ($\varepsilon$-caprolactone, $\beta$-propiolactone, $\delta$-valérolactone, etc.).

Le polyester peut être aussi bien un homopolymère obtenu au départ d'un seul ester cyclo-aliphatique qu'un copolymère obtenu à partir de plusieurs esters cyclo-aliphatiques différents. On préfère utiliser des homopolymères, et tout particulièrement des polylactones homopolymères. Dans le cadre de la présente invention, on considère également comme des polyesters aliphatiques les copolymères comprenant au moins un ester cyclo-aliphatique ainsi que jusqu'à 20 % (en moles) d'un ou plusieurs autres comonomères cycliques pouvant être copolymérisé par ouverture de cycle, par exemple choisis parmi les carbonates cycliques, les anhydrides cycliques ou les amides cycliques. En vue d'obtenir un polymère biodégradable, on choisira de préférence un comonomère aliphatique, par exemple le triméthylène carbonate, le 2,2-diméthyltriméthylène-carbonate, le propylènecarbonate ou l'anhydride succinique.

Les copolymères peuvent être statistiques ou à blocs. Pour obtenir des copolymères à blocs, on peut notamment opérer au départ d'oligomères, ou encore introduire les monomères à différents endroits dans l'extrudeuse.

Avantageusement, le polyester est une poly-$\varepsilon$-caprolactone (PCL), c'est-à-dire un homopolymère de l'$\varepsilon$-caprolactone. Des résultats intéressants ont été obtenus lorsque le polyester a une masse moléculaire moyenne en nombre (Mn) inférieure à 74000 g/mol ; ces résultats sont remarquables lorsque $M_n$ est inférieur à 60000, et en particulier inférieur à 50000 g/mol. Ces valeurs sont particulièrement faibles par rapport aux masses moléculaires qui ont été utilisées jusqu'ici en vue du soufflage de films à base de tels polyesters.

On notera que ces valeurs préférentielles concernent la masse moléculaire que le polyester présente dans le film finalement obtenu, c'est-à-dire après une éventuelle hydrolyse des éventuelles liaisons hydrolysables. Il se peut donc que le polyester présente une masse moléculaire beaucoup plus élevée (par exemple trois fois plus élevée) au niveau de la filière d'extrusion-soufflage.

La synthèse du polyester s'effectue en présence d'un amorceur comprenant au moins un tri- ou tétralkoxyde métallique, à base d'un métal bien connu pour cet usage, tel que l'aluminium ou l'yttrium, ou encore Sm, Lu ou Nd. De plus amples détails concernant ces composés sont donnés ci-dessous au travers d'exemples concernant les trialkoxydes d'aluminium, sans que ce choix n'ait de caractère limitatif L'alkoxyde utilisé (ou l'un ou plusieurs d'entre eux) peut éventuellement être oligomérique, c'est-à-dire résulter de la prépolymérisation d'un monomère approprié (par exemple la $\varepsilon$-caprolactone) avec un tri- ou tétralkoxyde monomérique ; de tels alkoxydes oligomériques ont généralement une masse moléculaire moyenne en nombre d'environ 500 à 2000. Outre un ou plusieurs tri- et/ou tétralkoxydes métalliques, l'amorceur peut également comprendre un ou plusieurs alcools tels que par exemple le 1,1,1-triméthylolpropane, le butanediol, le 1-hexadécanol, le méthoxyéthanol, etc. On préfère utiliser comme alcool le méthoxyéthanol.

Un tri- ou tétralkoxyde métallique peut éventuellement être synthétisé in situ, par exemple par réaction d'un alkylaluminium avec un alcool, ou d'un halogénure avec un époxyde.

L'utilisation d'au moins un tri- ou tétralkoxyde métallique permet de synthétiser des chaînes ramifiées de polyester. Sans que cette explication ne soit contraignante ni limitative, on considère que cette ramification exerce une influence bénéfique sur les propriétés rhéologiques de la composition lors de sa mise en oeuvre par extrusion-soufflage. C'est donc lors de cette mise en oeuvre (à la sortie de la filière d'extrusion-soufflage) qu'il importe qu'au moins une partie des chaînes de polymère soient ramifiées ; une éventuelle disparition des ramifications (par exemple par hydrolyse sous l'effet de l'humidité de l'air ambiant) postérieure à la fabrication du film n'est pas considérée comme critique.

Outre un ou plusieurs alkoxydes tri- ou tétra-fonctionnels, l'amorceur peut éventuellement comprendre un ou plusieurs alkoxydes mono- ou bifonctionnels, pour autant que leur quantité n'excède pas 80 % en moles par rapport à la quantité totale d'amorceur.

L'amorceur peut en outre éventuellement comprendre un ou plusieurs agents de réticulation tels que par exemple un peroxyde. Des peroxydes utilisables à cette fin sont notamment le tert-butyl-cumyl-peroxyde, le dicumyl peroxyde et le tert-butyl-peroxy-benzoate ; leur quantité est généralement de 0,05 % à 1 % en poids par rapport au(x) monomère(s).

On préfère que le polyester soit synthétisé à l'intervention d'un amorceur comprenant au moins un trialkoxyde métallique. De préférence, au moins 20 % (en moles) par rapport à l'amorceur est constitué par un ou plusieurs trialkoxydes métalliques. De manière particulièrement préférée, le trialkoxyde métallique est un trialkoxyde d'aluminium.

Par trialkoxyde d'aluminium, on entend tout composé organoaluminique contenant trois liens aluminoxane-carbone (>Al-O-C-). A titres d'exemples de pareils trialkoxydes, on peut mentionner ceux répondant à la formule générale R-O-Al(OR'')-O-R' (I), dans laquelle R, R' et R'' représentent, indépendamment l'un de l'autre, un radical hydrocarboné linéaire ou ramifié contenant de 1 à 16 atomes de carbone, de préférence de 2 à 8 atomes de carbone. De préférence, R, R' et R'' sont identiques et représentent un radical alkyle linéaire ou ramifié contenant de 2 à 6 atomes de carbone. Ces trialkoxydes peuvent être préparés "in situ" par mise en oeuvre de trialkylaluminiums et d'alcools. A titre d'exemples représentatifs des trialkoxydes de type (I), on peut citer le tri-isopropoxyde d'aluminium et le tri-sec-butoxyde d'aluminium.

A titre d'exemples de trialkoxydes également utilisables, on peut mentionner les trialkoxydes d'aluminium dont au moins un radical alkoxy comprend, outre l'atome d'oxygène constitutif du lien aluminoxane (Al-O), au moins un autre atome d'oxygène, ce dernier étant de préférence présent sous la forme d'une fonction ester ou éther.

A titre d'exemples de trialkoxydes d'aluminium contenant une liaison éther, on peut mentionner les trialkoxydes répondant à la formule générale statistique

$$(R_1\text{-}O)_{3\text{-}n} \text{ - Al - } (O\text{-}R_2\text{-}O\text{-}R_3)_n \qquad (II)$$

dans laquelle :

- n représente un nombre de 1 à 3,
- $R_1$ représente un radical alkyle, linéaire ou ramifié, contenant de 1 à 16 atomes de carbone, de préférence de 2 à 8 atomes de carbone,
- $R_2$ représente un radical alkylène, linéaire ou ramifié, contenant de 1 à 10 atomes de carbone, de préférence de 2 à 8 atomes de carbone,
- $R_3$ représente un radical alkyle ou aryle contenant de 1 à 6 atomes de carbone, de préférence un radical alkyle contenant de 1 à 4 atomes de carbone.

A titre d'exemple représentatif de trialkoxydes de type (II), on peut citer le tri(méthoxyéthoxy)aluminium.

A titre d'exemples de trialkoxydes d'aluminium contenant une liaison ester, on peut mentionner les trialkoxydes répondant à la formule générale statistique

$$R_4\text{-}X_n\text{-}O\text{-}Al\,(O\text{-}X_m\text{-}R_6)\text{-}O\text{-}X_p\text{-}R_5 \qquad (III)\text{, dans laquelle :}$$

- X représente un radical dérivé de l'ε-caprolactone, de formule $\text{-}(CH_2)_5 \text{ - } C(O) \text{ - } O \text{ - }$ ;
- n, m et p représentent, indépendamment l'un de l'autre, des nombres entiers de 0 à 12 dont la somme vaut au moins 1 et ne dépasse pas 12 et, de préférence, vaut au moins 3 et ne dépasse pas 10 ;
- $R_4$, $R_5$ et $R_6$ représentent indépendamment l'un de l'autre un radical alkyle contenant de 1 à 10 atomes de carbone et, de préférence, sont identiques et représentent un radical alkyle contenant de 2 à 8 atomes de carbone.

A titre d'exemple représentatif des trialkoxydes de type (III), on peut citer celui dans lequel la somme de n, m et p vaut 8, et $R_4$, $R_5$ et $R_6$ représentent le radical sec-butyle.

La quantité d'alkoxyde à mettre en oeuvre dépend essentiellement des masses moléculaires moyennes en nombre ($M_n$) visées. Il existe une relation pratiquement linéaire, indépendante de la température de polymérisation, entre le rapport des quantités de monomère(s) et d'alkoxyde mis en oeuvre et la masse moléculaire moyenne du polyester produit, de sorte qu'il est aisé de calculer les quantités relatives d'alkoxyde à mettre en oeuvre. A titre d'exemple, dans le cas de la fabrication continue d'ε-caprolactone dans une extrudeuse, la relation entre les débits d'alimentation de l'extrudeuse en monomère (Dm) (débit massique : g/min) et en amorceur (Dam) (débit molaire : mol/min) répond à l'équation suivante :

$$M_n = Dm / (N * Dam)$$

dans laquelle N représente le nombre de fonctions alkoxyde de l'amorceur, augmenté, le cas échéant, du nombre de fonctions hydroxyle éventuellement présentes. Ainsi, dans le cas d'un amorceur comprenant 1 mole de tri-sec-butoxyde d'aluminium et 1 mole de méthoxyéthanol, on a N = 4.

Idéalement, tous les réactifs mis en oeuvre à la polymérisation doivent être substantiellement anhydres. Néanmoins, des teneurs résiduelles en eau ne dépassant pas 100 mg/kg de monomère et plus particulièrement encore ne dépassant pas 50 mg/kg de monomère pourront être tolérées, car elles n'ont pas d'influence significative sur la masse moléculaire.

La température de polymérisation n'ayant pas d'effet significatif sur la masse moléculaire, elle peut sans inconvénient fluctuer dans une assez large mesure et ne doit pas nécessairement être la même dans les différentes zones du réacteur de polymérisation. Toutefois, il est impératif qu'elle soit au moins égale à la température de fusion du polyester produit. Pour fixer les idées, la température minimale pour l'homopolymérisation de l'ε-caprolactone se situe à 60 °C. Des températures plus élevées permettent d'accélérer la vitesse de polymérisation. En pratique, toujours pour l'homopolymérisation de l'ε-caprolactone, on ne dépassera généralement pas 170 °C et, de préférence pas 160 °C, de sorte à ne pas devoir procéder à un refroidissement intermédiaire entre la synthèse et l'extrusion-soufflage immédiatement consécutive.

Dans cette zone de températures, on atteint généralement des taux de conversion et des rendements proches de 100 % pour des temps de séjour moyens de la masse réactionnelle dans le réacteur ne dépassant pas environ 10 minutes et le plus souvent ne dépassant pas 6 minutes, voire 3 minutes.

Dans le contexte de la présente invention, la caractéristique selon laquelle le film est "essentiellement constitué" de polyester aliphatique vise à exclure la présence éventuelle de plus de 5 % en poids de polymère(s) qui ne serai(en)t pas des polyesters aliphatiques. Le cas échéant, de tels autres polymères sont avantageusement également biodégradables. De préférence, ils sont absents. Outre un polyester aliphatique et éventuellement jusqu'à 5 % d'un ou plusieurs autres polymères, le film peut éventuellement comprendre jusqu'à 5 % en poids d'additif(s) monomérique(s) ou oligomérique(s). Ces additifs peuvent notamment être des antioxydants, des stabilisants, des agents nucléants, des agents antibloquants, etc. ; leur teneur en eau est de préférence inférieure à 1 g d'eau par kg de polymère additivé.

D'autre part, le film peut éventuellement comprendre jusqu'à 50 % (par rapport au poids total du film) d'une ou plusieurs matières de charge. Ces matières de charge sont de préférence inorganiques (carbonate de calcium, sulfate de calcium, dolomite, talc, kaolin, etc.) ou d'origine naturelle (amidon, farine de bois, cellulose et ses dérivés, papier recyclé, etc.). De manière surprenante, on a constaté que la présence de 15 % à 50 % en poids d'une ou plusieurs matières de charge, par rapport au poids du polyester, et en particulier de carbonate de calcium, ne compromet pas la stabilité de la bulle et améliore la résistance du film au déchirement. Cette constatation est surprenante dans la mesure où il est généralement admis que la présence de charges minérales accroît les risques de déchirement du film et d'instabilité de la bulle. Le procédé de l'invention est donc doublement avantageux en vue de la fabrication de films chargés, dans la mesure où d'une part la proportion de charges peut être accrue sans obligation de réduire les taux de gonflement et d'étirage, et où d'autre part les propriétés du film ainsi obtenu sont améliorées.

Par dispositif d'extrusion, on entend désigner dans le contexte de la présente invention tout dispositif permettant à la fois de réaliser la synthèse du polyester à partir des différents ingrédients (monomère(s), amorceur, additifs et/ou charges éventuels) et d'expulser la composition ainsi obtenue à travers une filière appropriée, à l'état fondu. Il peut notamment s'agir d'un réacteur de polymérisation équipé d'une filière appropriée ainsi que de moyens permettant d'alimenter la filière en polymère fondu à un débit adéquat (par exemple d'une pompe à engrenages). Il peut également s'agir d'une extrudeuse au sens classique du terme, comprenant une ou plusieurs vis sans fin en rotation dans un fourreau à l'extrémité duquel est également installée une filière appropriée.

En vue de fabriquer un film soufflé, la filière utilisée doit présenter des caractéristiques bien connues. Il s'agit d'une filière de forme généralement annulaire, par exemple de forme ovale ou - de préférence - circulaire, et qui est équipée de moyens permettant d'injecter un gaz dans la zone centrale de la paraison extrudée, de manière à former une "bulle" approximativement cylindrique et de provoquer un étirage radial (gonflement) du film.

Dans le cas de la synthèse de poly-$\varepsilon$-caprolactone, la température de la matière plastique dans la filière ne dépasse généralement pas 180 °C. De préférence, elle ne dépasse pas 160 °C. Elle est avantageusement de 120 à 150 °C. Pour d'autres types de polyesters aliphatiques, la température de la composition au droit de la filière doit être supérieure à la température de cristallisation du polymère, et inférieure à 220 °C, de préférence inférieure à 190 °C.

L'utilisation d'un tel dispositif permet, conformément à l'invention, d'effectuer la synthèse du polyester et son extrusion en ligne, c'est-à-dire de manière immédiatement consécutive. Ceci est contraire aux procédés classiques de fabrication d'articles à base de polyesters aliphatiques, selon lesquels le polyester est fabriqué en phase fondue dans une première étape à l'issue de laquelle il est solidifié, typiquement sous la forme de granules, et est transformé en produit fini dans une seconde étape, pendant laquelle on provoque à nouveau sa fusion. Le procédé de la présente invention, quant à lui, impose que l'on introduise directement dans le dispositif d'extrusion les différents ingrédients (monomère(s), amorceur, additifs et/ou charges éventuels). Une telle manière de procéder se révèle avantageuse, notamment sur le plan des propriétés rhéologiques et sur le plan économique.

De manière connue, après sa sortie de la filière, la matière plastique est étirée sous l'effet de la pression du gaz injecté dans la "bulle" ainsi formée. La pression de ce gaz est l'un des facteurs qui déterminent le taux de gonflement, c'est-à-dire l'étirage radial que subit le film. Le taux de gonflement peut notamment se calculer en divisant le périmètre final de la bulle par la circonférence de la filière. En vue de provoquer la solidification du film, on dispose généralement autour de la bulle des moyens de refroidissement. Il peut notamment s'agir d'un dispositif annulaire, entourant la bulle, muni d'orifices par lesquels on souffle sur le film un gaz dont la température est inférieure à celle du film, souvent de l'air à température ambiante. On préfère que le film en cours d'extrusion-soufflage soit refroidi exclusivement par un courant de gaz, ce qui exclut notamment un refroidissement par eau.

Une fois le film solidifié, on pince généralement la bulle entre deux rouleaux parallèles, au-delà desquels on dispose ainsi d'un film sous la forme d'une gaîne aplatie, que l'on peut alors, par exemple, enrouler sur un mandrin, éventuellement après l'avoir fendue et ouverte.

Le taux d'étirage axial (Te) (plus simplement appelé "taux d'étirage", par opposition au "taux de gonflement") est déterminé par la vitesse de la matière à la sortie de la filière ainsi que par la vitesse linéique du film (V) après étirage (mesurée par exemple au niveau des rouleaux de pinçage de la bulle). On peut notamment le calculer par la formule $Te = V * Sf / Dm$, dans laquelle Dm désigne le débit volumique total de la matière extrudée (monomère(s), amorceur, additifs et/ou charges éventuels, ...) et Sf désigne la section de passage de la filière. Le procédé de l'invention permet aisément d'atteindre un taux d'étirage d'au moins 2,5, sans provoquer de problèmes de stabilité de la bulle. Il permet également d'atteindre des taux de gonflement et d'étirage d'au moins 3, et même d'au moins 4. Il va sans dire que de tels taux sont impossibles à atteindre (sans provoquer d'instabilité) en utilisant les procédés antérieurement connus d'extrusion-soufflage des polymères concernés. L'épaisseur finale du film est généralement de l'ordre de 10 à 100 μm.

Comme exposé ci-dessus et comme confirmé par les exemples qui suivent, le procédé de l'invention présente une plage de stabilité considérablement plus large que les procédés connus. Il peut donc être régulé d'une manière moins précise, et/ou les limitations imposées à ses conditions opératoires peuvent être moins strictes (y compris en ce qui concerne la masse moléculaire du polymère). Ceci permet notamment d'augmenter les taux de gonflement et d'étirage (donc la largeur du film), la température de la filière (ce qui réduit la consommation d'énergie mécanique et améliore l'aspect de surface du film) et le débit du dispositif d'extrusion (ce qui augmente la productivité de l'installation).

Les films fabriqués selon le procédé de l'invention peuvent notamment servir à la fabrications de sacs biodégradables (notamment pour l'emballage d'ordures ménagères), ou encore d'articles sanitaires biodégradables tels que des couches-culottes.

On a constaté que le procédé de l'invention permet de fabriquer des films présentant des propriétés mécaniques surprenantes.

A cette fin, la présente invention concerne également un film essentiellement constitué d'un polyester aliphatique, pouvant être obtenu selon le procédé de l'une des revendications précédentes, dont les modules d'élasticité longitudinal (EL) et transversal (ET) et le retraits longitudinal (RL) et transversal (RT), ces retraits étant mesurés à une température inférieure d'environ 5°C à la température de fusion du polyester, respectent les relations suivantes :

$$ET \geq EL \text{ et } RT \leq RL.$$

Cette caractéristique étonnante donne au film des propriétés mécaniques extrêmement favorables, telles qu'une excellente résistance à la perforation. De tels films peuvent également être très avantageusement utilisés pour la fabrication de gaînes imprimées destinées à être glissées autour de bouteilles de matière plastique.

Pour la définition du polyester aliphatique, on se référera aux détails fournis ci-dessus en relation avec le procédé. On vise en particulier les polyesters dérivés d'au moins un ester cycloaliphatique, et de préférence ceux dérivés d'au moins une lactone. Il s'agit avantageusement de poly-ε-caprolactone. Un ou plusieurs additifs usuels et/ou charges peuvent être présents, dans les conditions indiquées précédemment.

De préférence, le polyester est synthétisé à l'intervention d'un amorceur comprenant au moins un trialkoxyde métallique et/ou tétralkoxyde métallique. Il s'agit là non seulement d'une caractéristique relative au procédé de fabrication de ce film, mais également d'une caractéristique objective, dans le mesure où le fait qu'un tel composé a été mis en oeuvre est encore détectable dans le film même si ledit alkoxyde réagit chimiquement avec le ou les monomères utilisés et/ou même si certaines liaisons s'hydrolysent.

## EXEMPLES

Les exemples suivants illustrent l'invention de façon non limitative. Les exemples 1-14 sont conformes à l'invention, et les exemples 15R-29R sont donnés à titre de comparaison.

Les exemples illustratifs démontrent que les conditions opératoires du procédé de l'invention peuvent subir de très larges variations sans nuire à la stabilité de celui-ci. Au contraire, les exemples comparatifs confirment que des variations comparativement faibles suffisent à rendre instables les procédés antérieurement connus.

L'équipement utilisé pour les exemples 1-14 comprend, d'amont en aval :

- une extrudeuse à double vis co-roratives WERNER & PFLEIDERER® ZSK25,
- une pompe à engrenages NORMAG® MHDP-110/078(E)X,
- un coude à 90°, permettant de raccorder l'extrudeuse (horizontale) à la filière (verticale),
- une filière annulaire pour la fabrication de film soufflé, avec un noyau de 30 mm de diamètre et un entrefer de 1 mm,
- un distributeur d'air de refroidissement, de 6 cm de diamètre, encerclant la bulle environ 2,5 cm au dessus de la filière,
- un dispositif de pinçage de la bulle (comprenant deux rouleaux pinceurs parallèles, horizontaux) et d'enroulement du film ; le paramètre "largeur lay-flat" mentionné ci-dessous représente la largeur de la bulle après son pinçage (gaîne aplatie), c'est-à-dire la moitié du périmètre de la gaîne.

La hauteur de la bulle soufflée (distance entre la filière et les rouleaux pinceurs) vaut 0,86 m. L'air de refroidissement est à température ambiante. L'air à l'intérieur de la bulle est initialement à température ambiante, et n'est pas renouvelé pendant l'essai.

Le monomère est de la ε-caprolactone pure (SOLVAY INTEROX) (ci-après "ε-CL"). L'amorceur de polymérisation est constitué d'un mélange équimolaire de tri-sec-butoxyde d'aluminium et de méthoxyéthanol, dissous à raison de 33 % en poids dans du 4-cymène (solvant ne participant pis à la polymérisation). Cet amorceur est miscible avec le monomère ε-CL. Le monomère et l'amorceur sont introduits par des conduites séparées dans la première zone de l'extrudeuse.

Le fourreau de l'extrudeuse est composé de 10 éléments. Il n'y a pas de dégazage. Le $7^{ème}$ élément de fourreau accepte une vis gaveuse, qui sert le cas échéant à introduire des matières de charge.

La matière de charge employée dans les exemples 10-14 est un carbonate de calcium naturel, traité en surface pour augmenter son affinité pour les polymères apolaires (OMYA® BLH). Dans les exemples 13-14, cette matière de charge a été préalablement séchée (en étuve, sous vide, à 100 °C, pendant une nuit).

Caractérisation des films

Le tableau 1 rassemble les conditions de mise en oeuvre et quelques caractéristiques des films produits selon l'invention.

$M_w$ et $M_n$ désignent respectivement les masses moléculaires moyennes en poids et en nombre, calculées à partir de la distribution des masses moléculaires, mesurée par chromatographie d'exclusion stérique à 25 °C après mise en solution à 2 g/l dans du tétrahydrofurane (THF), et après filtrage dans le cas de compositions contenant des charges (ex. 10-14). On notera que dans le cas de branchements permanents (non-hydrolysables) (ex. 27-29), la chromatographie sous-estime la masse moléculaire réelle.

La masse moléculaire en nombre théorique $M_{nTh}$ est directement proportionnelle au rapport des débits massiques de monomère (Dmm) (kg/h) au débit molaire d'amorceur (Dma), exprimé en moles d'Al par heure : $M_{nTh}$ = Dmm / (4 * Dma).

Le paramètre "température max." désigne la température maximale relevée sur l'équipement de mise en oeuvre. La température de la matière à la filière est généralement inférieure à cette valeur.

La vitesse linéique du film est mesurée au niveau des rouleaux de pinçage de la bulle.

Le retrait longitudinal (RL) et transversal (RT) sont évalués de la façon suivante : on découpe dans le film un carré de 100 mm de côté, avec un bord parallèle au sens de la mise en oeuvre. L'échantillon, posé sur un support lisse enduit de talc pour éviter toute adhérence, est alors introduit dans une étuve ventilée préchauffée à 57 °C. Une fois que la température de l'étuve s'est rétablie à 57 °C (l'introduction de l'échantillon provoque en effet généralement une chute de la température dans l'étuve), on laisse l'échantillon pendant 15 minutes dans l'étuve. Les dimensions de l'échantillon sont mesurées avant et après le traitement, selon une droite dessinée à environ 2 cm de chaque bord (4 mesures par échantillon). Les mesures sont faites au moins deux fois pour chaque film (sur des échantillons distincts), et la moyenne de chaque groupe de valeurs est calculée. Dans les exemples qui suivent, on a fait chaque fois la moyenne de deux mesures. La température de 57 °C a été utilisée pour les films à base de PCL homopolymère ; dans le cas général, la température est inférieure d'environ 5 °C à la température de fusion du polyester. On notera qu'un léger écart de température par rapport à cette valeur ($T_f$-5), même s'il peut modifier les valeurs absolues de RT et RL, ne modifiera pas la relation RT ≤ RL.

Le module d'élasticité (E) est mesuré selon la norme ISO527-3/1993 sur des éprouvettes de type 2, à la vitesse de traction de 1 mm/min, dans les sens longitudinal (EL) et transversal (ET), en sa basant sur le segment 0,05%-0,25% de la courbe de traction. L'allongement à la rupture ($\varepsilon_b$) est évalué selon la même norme avec une vitesse de 500 mm/min, également dans les sens longitudinal (L) et transversal (T).

Description des exemples 1-14 (conformes à l'invention) (tableau 1)

- Exemples 1-5 : Cette série illustre la stabilité de la bulle par rapport à une augmentation du taux d'étirage. On constate que même à des étirages axiaux supérieurs à 20, correspondant à une épaisseur de 10 μm, la bulle reste stable. Ces films présentent un module élastique élevé et un retrait longitudinal supérieur à 1 %.
- Exemple 6 : La masse moléculaire très élevée du polymère rend le film très élastique en sortie de filière. Les étirages radial et axial requièrent dès lors des efforts considérables, qui induisent des contraintes et provoquent ensuite des retraits importants. La surface du film est très rugueuse à cause de ruptures d'écoulement.
- Exemples 7-8 : Ces deux films montrent qu'un taux de gonflement de l'ordre de 5 ne déstabilise pas la bulle. Des étirages radiaux plus importants n'ont pas pu être testés parce que la largeur du film dépasserait alors la largeur des rouleaux pinceurs. Ces exemples prouvent aussi que des débits plus élevés sont accessibles. La température de la matière à la filière (144 °C) ne pose pas de problèmes grâce à la stabilité de la bulle.
- Exemple 9 : La bulle est stable malgré la masse moléculaire très faible du polymère.
- Exemples 10-11 : Fabrication de films contenant 15 % de carbonate de calcium (non séché au préalable). L'exemple 11 démontre que ni un étirage important ni une température de mise en oeuvre élevée ne parviennent à déstabiliser la bulle soufflée malgré la présence de charges minérales.

- Exemple 12 : Ce film contient 25 % en poids de carbonate de calcium non séché. La masse moléculaire $M_w$ du polymère (60 kg/mol) est inférieure à 74 kg/mol.
- Exemple 13 : Ce film est fabriqué dans des conditions identiques à l'exemple 9, excepté l'addition de 26 % de CaCO$_3$ sec.
- Exemple 14 : Cet exemple démontre qu'on peut incorporer jusqu'à 36 % de charges minérales.

Exemples comparatifs 15R-26R (tableau 2)

A titre comparatif des granules de polycaprolactones ont été fabriqués par extrusion réactive dans une première étape, puis utilisés pour fabriquer un film soufflé dans une seconde étape ultérieure (contrairement au procédé en une seule étape conforme à l'invention). L'amorceur utilisé lors de la première étape (synthèse) consistait en un prépolymère ramifié obtenu par réaction de 8 moles de $\varepsilon$-caprolactone avec 1 mole d'aluminium tri-sec-butoxyde. A l'issue de leur synthèse, les joncs extrudés sont refroidis dans un bac d'eau froide, séchés par soufflerie d'air, puis granulés et stockés.

En vue de la fabrication de film soufflé, ces granules alimentent ensuite une extrudeuse DOLCI® 20, équipée d'une vis d'un diamètre de 20 mm et d'une longueur de 482 mm, présentant un facteur de compression de 1,75. La filière d'extrusion-soufflage a un diamètre extérieur de 30 mm et un noyau d'un diamètre de 28,5 mm (entrefer de 0,75 mm). Le film est refroidi par une buse annulaire soufflant de l'air à température ambiante, située à 40 mm de la filière.

Chacun des groupes d'exemples 15R à 18R, 20R et 21R, 22R à 24R, 25R et 26R, ainsi que 28R et 29R, concernent un même produit, testé cependant dans différentes conditions.

Les principales conditions opératoires sont reprises dans le tableau 2. Dans ce tableau, la stabilité de la bulle de film lors de l'extrusion-soufflage a été qualifiée comme suit :

- "OK" quand le diamètre de la bulle soufflée restait constant ; ce n'est que dans ces cas-là que la bulle était stable ;
- "Limite" quand les dimensions du film fluctuaient lentement ;
- "Vibre" quand les variations de diamètre étaient rapides, mais de faible amplitude ;
- "Pulse" quand le procédé était loin au delà de la limite de stabilité : le col de la bulle monte et descend de plusieurs cm par seconde, le diamètre de la bulle change de plusieurs cm sans qu'on ne modifie les conditions d'extrusion.

Les données reprises dans le tableau 2 révèlent que :

- Une masse moléculaire moyenne en poids ($M_W$) de 65000 g/mol ne permet pas d'obtenir une bulle stable dans les conditions testées (contrairement à l'ex. 9) ;
- Aucune polycaprolactone n'a pu être soufflée à un taux d'étirage supérieur à 3,5 et des taux de gonflement modestes ($\leq$ 4), malgré les températures de mise en oeuvre peu élevées ;
- La plage de stabilité est très restreinte. De petites augmentations de l'étirage radial ou axial, un léger échauffement de la matière (en haussant les températures de l'extrudeuse ou en augmentant le débit) suffisent souvent à détruire l'équilibre.

De plus, la rhéologie de ces produits évolue au cours du stockage. Le durcissement en écoulement élongationnel ("strain hardening"), qui favorise la stabilité de la bulle lors de l'extrusion-soufflage, disparaît progressivement. Cette détérioration progressive de l'aptitude à la mise en oeuvre est bien entendu hautement indésirable.

Exemples comparatifs 27R-29R (tableau 3)

D'autres exemples comparatifs (tableau 3) ont été réalisés en synthétisant le polymère en autoclave dans la première étape (au moyen d'un catalyseur du type octoate stanneux). L'amorceur utilisé était un mélange équimolaire :

- de butane-diol et de PCL CAPA® 316 (à fonctionnalité 4) pour l'exemple 27R, ou
- d'alcool cétylique et de PCL CAPA 310 (à fonctionnalité 3) pour les exemples 28R-29R.

Par rapport au procédé de l'invention, on constate à nouveau une perte de stabilité à des taux de gonflement et d'étirage assez faibles et à de faibles des températures de mise en oeuvre.

Tableau 1

| Exemples | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Débit monomère (CL) | kg/h | 2,70 | 2,70 | 2,70 | 2,70 | 2,70 | 2,75 | 4,60 | 4,65 | 2,40 | 3,41 | 3,41 | 3,10 | 2,39 | 2,35 |
| Débit amorceur | ml/h | 15,0 | 15,0 | 15,0 | 15,0 | 15,0 | 7,0 | 23,0 | 23,0 | 17,0 | 15,0 | 15,0 | 26,0 | 17,0 | 18,5 |
| Charges ($CaCO_3$) | | - | - | - | - | - | - | - | - | - | BLH | BLH | BLH | BLH sec | BLH sec |
| concentration | % g/g | 0 | 0 | 0 | 0 | 0 | 0 | 0 | 0 | 0 | 15 | 15 | 25 | 26 | 36 |
| Température max. | °C | 142 | 142 | 142 | 142 | 142 | 144 | 149 | 149 | 145 | 153 | 156 | 144 | 145 | 145 |
| Vitesse linéique du film | m/min | 2,0 | 4,0 | 6,0 | 8,0 | 10,0 | 2,0 | 2,0 | 4,0 | 2,0 | 2,0 | 4,0 | 2,0 | 2,0 | 2,0 |
| Largeur lay-flat (½) | cm | 18 | 18 | 18 | 18 | 18 | 15 | 23 | 28 | 17 | 25 | 25 | 18 | 16 | 23 |
| Epaisseur | µm | 57 | 30 | 20 | 17 | 10 | 74 | 90 | 40 | 57 | 58 | 34 | 88 | 83 | 75 |
| Etirage axial | | 4,5 | 9,0 | 13,5 | 17,9 | 22,4 | 4,4 | 2,6 | 5,2 | 5,0 | 3,3 | 6,7 | 3,5 | 4,5 | 4,2 |
| Gonflement | | 3,7 | 3,7 | 3,7 | 3,7 | 3,7 | 2,9 | 4,7 | 5,6 | 3,4 | 4,9 | 4,9 | 3,5 | 3,2 | 4,5 |
| $M_n$ | kg/mol | 44 | 44 | 44 | 44 | 44 | 83 | ND | ND | 32 | 50 | 50 | 30 | 32 | 36 |
| $M_n$ théorique | kg/mol | 48 | 48 | 48 | 48 | 48 | 105 | 53 | 54 | 36 | 58 | 58 | 31 | 36 | 33 |
| RL | % | 1,175 | | 2,75 | | 3,25 | 2,15 | | | 1,35 | 0,55 | 3,1 | 0,35 | 0,75 | 0,35 |
| RT | % | 0,275 | | 0,325 | | 0,05 | 1,35 | | | 0,225 | 0,325 | 0,525 | -0,1 | -0,1 | 0,05 |
| EL | MPa | 1025 | | 1000 | | | 525 | | | | 605 | | 960 | | 845 |
| ET | MPa | 1090 | | 1220 | | | 525 | | | | 780 | | 1230 | | 1190 |
| $\varepsilon_b$ (L) | % | 395 | 360 | 245 | | 130 | 440 | | | 343 | 675 | 395 | 280 | | 65 |
| $\varepsilon_b$ (T) | % | 320 | 170 | 345 | | 380 | 490 | | | 100 | 770 | 735 | 50 | | 78 |

ND = non déterminé

EP 0 878 289 A1

## Tableau 2

| Exemple | | 15R | 16R | 17R | 18R | 19R | 20R | 21R | 22R | 23R | 24R | 25R | 26R |
|---|---|---|---|---|---|---|---|---|---|---|---|---|---|
| Débit | kg/h | 2,9 | 3,4 | 2,9 | 2,2 | 3 | 2,4 | 2,4 | 3,1 | 3 | 3,1 | 3,2 | 3,2 |
| Vitesse de la vis | rpm | 50 | 63 | 50 | 40 | 52 | 40 | 40 | 64 | 64 | 64 | 53 | 53 |
| Température max. | °C | 110 | 111 | 110 | 107 | 112 | 107 | 107 | 111 | 120 | 120 | 116 | 116 |
| Vitesse linéique | m/min | 2 | 2 | 2,4 | 3,16 | 2 | 2 | 2,9 | 2 | 2 | 2,67 | 2 | 2,6 |
| Largeur lay-flat | cm | 17,5 | 14,7 | ~15,0 | 16,5 | ~17,5 | 13,8 | NM | 18,5 | NM | NM | 19,5 | 18 |
| Epaisseur | µm | 60 | ND | ND | ND | ~65 | ND | NM | ND | NM | NM | 60 | 40 |
| Etirage axial | | 2,9 | 2,5 | 3,5 | 6,0 | 2,8 | 3,5 | 5,0 | 2,7 | 2,8 | 3,6 | 2,6 | 3,4 |
| Gonflement | | 3,7 | 3,1 | 3,2 | 3,5 | 3,7 | 2,9 | | 3,9 | NM | NM | 4,1 | 3,8 |
| Stabilité | | OK | Limite | Pulse | vibre | Pulse | OK | Pulse | OK | Limite | Pulse | OK✶ | Limite |
| Durée de stockage | jours | 21 | | | 120 | 32 | 20 | | | | | 21 | |
| $M_w$ | kg/mol | 90 | | | | 65# | 96 | | 94 | | | 111 | |
| $M_n$ | kg/mol | 43✤ | | | | 31✤ | 46✤ | | 45 | | | 50 | |

NM : non-mesurable

✤ : estimé sur base d'un indice de polydispersité de 2,1

✶ : perte de stabilité en réduisant le débit d'air de refroidissement

# : masse moléculaire Mw apparente estimée à partir de la viscosité en cisaillement

Tableau 3

| Exemple | | 27R | 28R | 29R |
|---|---|---|---|---|
| Débit | kg/h | 2,43 | 2,95 | 2,95 |
| Vitesse de la vis | rpm | 44 | 44 | 44 |
| Température max. | °C | 113 | 126 | 126 |
| Vitesse linéique | m/min | 2 | 2,95 | 2,95 |
| Largeur lay-flat | cm | 10,2* | 13,4 | ~16,5 |
| Etirage axial | | 3,4 | 4,2 | 4,2 |
| Gonflement | | 2,2* | 2,8 | 3,5 |
| Stabilité | | OK | OK | Pulse |
| $M_w$ | kg/mol | 100# | 115# | |
| $M_n$ | kg/mol | ND | 62 | |

\* Perte de stabilité en voulant augmenter légérement le diamétre de la bulle
\# Masse moléculaire $M_w$ apparente estimée à partir de la viscosité en cisaillement

## Revendications

1. Procédé de fabrication d'un film soufflé essentiellement constitué d'un polyester aliphatique, selon lequel :

    (1) on synthétise le polyester à partir d'au moins un ester cyclo-aliphatique, à l'intervention d'un amorceur comprenant au moins un trialkoxyde métallique et/ou tétralkoxyde métallique, dans un dispositif d'extrusion ;
    (2) on procède à l'extrusion-soufflage du polyester, immédiatement après sa synthèse dans ledit dispositif d'extrusion, muni à cet effet d'une filière d'extrusion-soufflage, avec un taux de gonflement d'au moins 2,5.

2. Procédé selon la revendication 1, dans lequel le polyester est une poly-$\varepsilon$-caprolactone.

3. Procédé selon l'une des revendications précédentes, dans lequel le polyester a une masse moléculaire moyenne en nombre inférieure à 74000 g/mol.

4. Procédé selon l'une des revendications précédentes, dans lequel le polyester est synthétisé à l'intervention d'un amorceur comprenant au moins un trialkoxyde métallique.

5. Procédé selon la revendication précédente, dans lequel le trialkoxyde métallique est un trialkoxyde d'aluminium.

6. Procédé selon l'une des revendications précédentes, dans lequel le film comprend de 15 à 50 % en poids d'au moins une matière de charge, par rapport au poids du polyester.

7. Procédé selon l'une des revendications précédentes, dans lequel le film en cours d'extrusion-soufflage est refroidi exclusivement par un courant de gaz.

8. Procédé selon l'une des revendications précédentes, dans lequel le taux d'étirage est d'au moins 2,5.

9. Procédé selon l'une des revendications précédentes, dans lequel le taux d'étirage et le taux de gonflement sont d'au moins 3.

10. Film essentiellement constitué d'un polyester aliphatique, pouvant être obtenu selon le procédé de l'une des revendications précédentes, dont les modules d'élasticité longitudinal (EL) et transversal (ET) et les retraits longitudinal (RL) et transversal (RT), ces retraits étant mesurés à une température inférieure d'environ 5 °C à la température de fusion du polyester, respectent les relations suivantes :

ET $\geq$ EL et RT $\leq$ RL.

**Office européen des brevets**

**RAPPORT DE RECHERCHE EUROPEENNE**

Numéro de la demande

EP 98 20 1493

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | WO 97 10280 A (SOLVAY INTEROX LIMITED) 20 mars 1997<br>* page 9, ligne 11 - page 10, ligne 24 *<br>* page 12, ligne 20 - ligne 24 *<br>* page 14, alinéa 3 - alinéa 4 *<br>--- | 1-9 | B29C67/24<br>B29C55/28<br>C08J5/18<br>C08G63/08 |
| Y | EP 0 626 405 A (SOLVAY SOCIÉTÉ ANONYME) 30 novembre 1994<br>* page 4, ligne 46 - page 5, ligne 36; exemples 1-6 *<br>--- | 1-9 | |
| P,X | WO 97 41165 A (MICHIGAN STATE UNIVERSITY) 6 novembre 1997<br>* page 3, ligne 23 - ligne 27 *<br>* page 14, alinéa 2; revendications 24-28,38; exemples 8,10 *<br>--- | 1,2,4-9 | |
| P,X | EP 0 775 720 A (SOLVAY SOCIÉTÉ ANONYME) 28 mai 1997<br>* page 3, ligne 25 - ligne 55 *<br>* page 6, ligne 32 - ligne 53 *<br>--- | 10 | |
| A | PATENT ABSTRACTS OF JAPAN<br>vol. 17, no. 499 (C-1109), 9 septembre 1993<br>& JP 05 132572 A (GUNZE LTD), 28 mai 1993<br>* abrégé *<br>--- | 1,2,10 | **DOMAINES TECHNIQUES RECHERCHES (Int.Cl.6)**<br>B29C<br>C08J<br>C08G<br>C08L |
| A | NL 6 814 418 A (SHELL INTERNATIONALE RESEARCH MAATSCHAPPIJ N.V.) 15 avril 1969<br>* page 5, alinéa 2 - page 6, alinéa 1 *<br>--- | 1 | |
| A | WO 90 05157 A (BOEHRINGER INGELHEIM KG) 17 mai 1990<br>* page 12, ligne 4 - ligne 5 *<br>--- | 1 | |
| | -/-- | | |

Le présent rapport a été établi pour toutes les revendications

| Lieu de la recherche | Date d'achèvement de la recherche | Examinateur |
|---|---|---|
| LA HAYE | 24 août 1998 | Van Nieuwenhuize, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen
des brevets**

**RAPPORT DE RECHERCHE EUROPEENNE**

Numéro de la demande

EP 98 20 1493

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 196 30 121 A (SHIMADZU CORP.) 30 janvier 1997 <br> * page 4, ligne 28 - ligne 51; revendications 1,6,14; figure 1 * <br> --- | 1 | |
| A | WO 95 18169 A (NESTE OY) 6 juillet 1995 <br> * revendications 1,8,12-15 * <br> --- | 1 | |
| A | US 3 021 313 A (EUGENE F. COX ET AL) 13 février 1962 <br> * le document en entier * <br> --- | 4,5 | |
| A | DUBOIS PH ET AL: "MACROMOLECULAR ENGINEERING OF LACTONE-BASED (CO)POLYMERS FOR BIOMEDICAL APPLICATIONS" <br> POLYMER PREPRINTS, <br> vol. 32, no. 1, 1 janvier 1991, page 449/450 XP000400693 <br> * le document en entier * <br> ----- | 4,5 | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| LA HAYE | 24 août 1998 | Van Nieuwenhuize, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)